# FASCICULE DE BREVET EUROPEEN

(11) **EP 3 556 102 B1**
(45) Date de publication et mention de la délivrance du brevet: **15.06.2022**
(21) Numéro de dépôt: 17791437.1
(22) Date de dépôt: 03.11.2017
(51) Int. Cl.: H04N 21/44, H04N 21/472, H04N 21/433, H04N 21/439, H04N 21/81

(54) **PROCEDE D'ENREGISTREMENT D'UN PROGRAMME TELEDIFFUSE A VENIR**
VERFAHREN ZUR AUFZEICHNUNG EINES BEVORSTEHENDEN TELERUNDFUNKPROGRAMMS
METHOD OF RECORDING A FORTHCOMING TELEBROADCAST PROGRAM

(30) Priorité: 19.12.2016 FR 1662793
(43) Date de publication de la demande: 23.10.2019
(73) Titulaire: Sagemcom Broadband SAS, 92500 Rueil-Malmaison (FR)
(72) Inventeur: HERRMANN, Laurent, 92500 Rueil Malmaison (FR); SEBIRE, Julien, 92500 Rueil Malmaison (FR)
(74) Mandataire: Lavaud, Thomas
(86) Numéro de dépôt international: PCT/EP2017/078224
(87) Numéro de publication internationale: WO 2018/114108

(56) Documents cités:
- EP-A1- 2 552 111
- EP-A2- 2 173 093
- DE-B3-102007 030 131
- US-A1- 2009 328 100
- US-A1- 2013 038 527
- US-A1- 2016 227 281
- BERRANI S A ET AL: "A non-supervised approach for repeated sequence detection in TV broadcast streams", SIGNAL PROCESSING. IMAGE COMMUNICATION, ELSEVIER SCIENCE PUBLISHERS, AMSTERDAM, NL, vol. 23, no. 7, 1 August 2008 (2008-08-01) , pages 525-537, XP023613500, ISSN: 0923-5965, DOI: 10.1016/J.IMAGE.2008.04.018 [retrieved on 2008-08-01]

## Description

L'invention concerne le domaine de l'enregistrement de programmes télédiffusés à venir.

### ARRIERE PLAN DE L'INVENTION

Lorsqu'une bande-annonce est diffusée à la télévision et qu'un utilisateur souhaite enregistrer le programme télédiffusé à venir dont la diffusion est annoncée par la bande-annonce, il doit effectuer un certain nombre d'opérations.

L'utilisateur doit saisir, via un menu de programmation, des informations de programmation fournies lors de la diffusion de la bande-annonce. Les informations de programmation comprennent par exemple l'heure de début du programme, l'heure de fin du programme, le canal de diffusion sur lequel le programme est diffusé, le titre du programme.

Alternativement, l'utilisateur doit parcourir un guide électronique des programmes (ou EPG, pour *Electronic Program Guide*) à la recherche du programme qu'il souhaite enregistrer. Le guide électronique des programmes peut comprendre une pluralité de pages.

Ces deux méthodes sont relativement complexes, peu ergonomiques, et surtout peu rapides à mettre en œuvre.

Plusieurs types de solutions ont été imaginés pour pallier ces inconvénients.

Un premier type de solutions permet d'enregistrer un programme à partir d'informations de programmation contenues dans un flux vidéo reçu par le téléviseur ou par un boîtier décodeur (ou *set-top box*) relié au téléviseur. Ce premier type de solutions nécessite cependant de coder au préalable les informations de programmation dans un langage que le téléviseur ou le boîtier décodeur puisse comprendre.

Un second type de solutions consiste à reconnaître, grâce à un scanner externe, des caractères imprimés sur un programme télévisuel imprimé. Ce second type de solutions est, d'une part, peu pratique à mettre en œuvre à cause de l'utilisation du scanner externe, et d'autre part, peu adapté à notre époque moderne, puisque de moins en moins d'utilisateurs utilisent des programmes télévisuels imprimés.

Le document US2009/328100 Al décrit un procédé d'enregistrement de l'art antérieur.

### OBJET DE L'INVENTION

L'invention a pour objet un procédé pour enregistrer un programme télédiffusé à venir, qui ne présente pas les inconvénients précités.

### RESUME DE L'INVENTION

En vue de la réalisation de ce but, on propose un procédé d'enregistrement d'un programme télédiffusé à venir dont une diffusion est annoncée par une bande-annonce visionnée par un utilisateur, le procédé d'enregistrement comportant les étapes :
- d'enregistrer en continu un programme télédiffusé en cours de visionnage par l'utilisateur en conservant l'enregistrement au moins sur une période d'enregistrement précédant un instant présent de visionnage ;
- lorsque la bande-annonce du programme télédiffusé à venir est diffusée, de recevoir un signal de demande d'enregistrement émis par l'utilisateur ;
- d'analyser l'enregistrement du programme télédiffusé en cours de visionnage sur la période d'enregistrement précédant la réception du signal de demande d'enregistrement pour obtenir des paramètres de programmation, l'analyse démarrant suite à la réception du signal de demande d'enregistrement ;
- d'enregistrer le programme télédiffusé à venir en utilisant les paramètres de programmation.

L'utilisateur, pour enregistrer le programme télédiffusé à venir, doit simplement envoyer le signal de demande d'enregistrement à un équipement, tel qu'un boîtier décodeur relié à un téléviseur, dans lequel le procédé d'enregistrement selon l'invention est mis en œuvre. L'envoi du signal de demande d'enregistrement est par exemple réalisé en appuyant sur une touche d'une télécommande. L'utilisateur ne doit donc pas saisir luimême des informations de programmation ou parcourir un guide électronique des programmes, mais uniquement envoyer le signal de demande d'enregistrement pendant ou après la diffusion de la bande-annonce.

Le procédé d'enregistrement selon l'invention ne nécessite pas de coder des données de programmation spécifiques dans un flux vidéo reçu par le boîtier décodeur.

On propose aussi un boîtier décodeur comportant des moyens de traitement agencés pour mettre en œuvre le procédé d'enregistrement qui vient d'être décrit.

On propose de plus un programme d'ordinateur comprenant des instructions pour mettre en œuvre, par un équipement de type boîtier décodeur, le procédé d'enregistrement qui vient d'être décrit.

On propose en outre des moyens de stockage qui stockent un programme d'ordinateur comprenant des instructions pour mettre en œuvre, par un équipement de type boîtier décodeur, le procédé d'enregistrement qui vient d'être décrit.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 représente un boîtier décodeur dans lequel est mis en œuvre le procédé d'enregistrement selon l'invention ;
- la figure 2 est une graphique qui représente, en fonction du temps, une étape d'enregistrement en continu mise en œuvre dans le procédé d'enregistrement selon l'invention ;
- la figure 3 représente les étapes du procédé d'enregistrement selon l'invention.

### DESCRIPTION DETAILLEE DE L'INVENTION

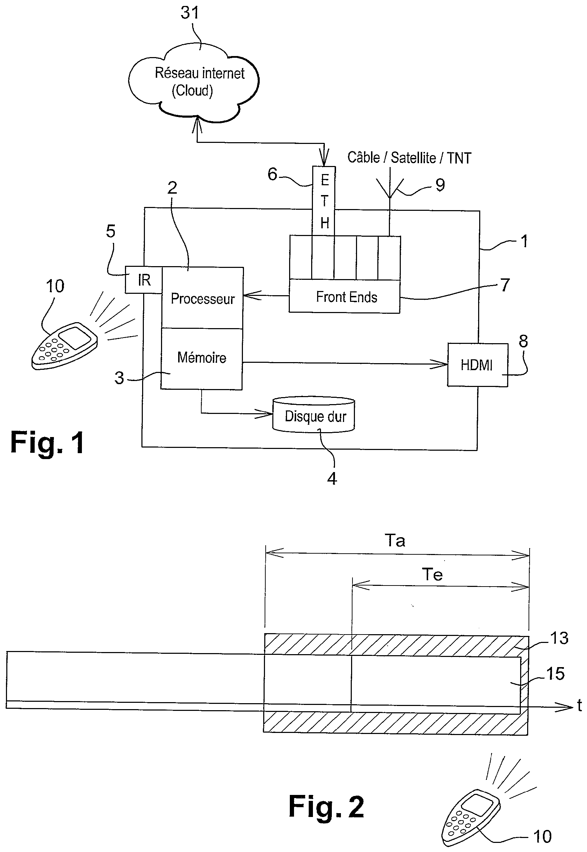

Le procédé d'enregistrement selon l'invention est ici mis en œuvre dans un boîtier décodeur 1, visible sur la figure 1, qui est connecté à un téléviseur.

Le boîtier décodeur 1 comporte un processeur 2, un disque dur 4, un port infrarouge 5, un port Ethernet 6, une interface de réception 7, une antenne 9 et un port HDMI 8.

Le processeur 2 du boîtier décodeur 1 reçoit un signal externe via le port Ethernet 6 ou l'antenne 9 et l'interface de réception 7, et le transforme en un flux vidéo compatible avec le téléviseur. Le flux vidéo est transmis au téléviseur via le port HDMI 8, et est diffusé sous la forme de programmes sur l'écran du téléviseur.

Un utilisateur, qui regarde les programmes télédiffusés par le téléviseur, commande le boîtier décodeur 1 grâce à une télécommande 10 via le port infrarouge 5.

Le boîtier décodeur 1 enregistre ici en continu un programme télédiffusé en cours de visionnage par l'utilisateur en conservant l'enregistrement au moins sur une période d'enregistrement précédant un instant présent de visionnage.

En référence à la figure 2, la période d'enregistrement Te du programme télédiffusé en cours de visionnage est enregistrée par l'intermédiaire d'un buffer circulaire 13. La période d'enregistrement Te correspond environ à la durée d'un intermède publicitaire, et est par exemple comprise entre 1 minute et 2 minutes. La période d'enregistrement Te est supérieure à la durée moyenne Ta d'une bande-annonce classique 15.

L'enregistrement continu de la période d'enregistrement Te du programme télédiffusé en cours de visionnage est ainsi réalisé d'une manière similaire à l'enregistrement continu réalisé pour mettre en œuvre une fonction de « contrôle du direct » (ou *timeshifting*)*.* Bien sûr, dans le cas de la fonction de contrôle du direct, la période d'enregistrement est beaucoup plus longue, et est classiquement égale à 1 heure, 2 heures, voire plus.

Une bande-annonce est alors diffusée par le téléviseur. La bande-annonce annonce la diffusion prochaine d'un programme télédiffusé à venir, sur un canal de diffusion particulier. Le programme télédiffusé à venir est par exemple un film, un jeu télévisé, une série, un événement sportif, etc.

La bande-annonce comprend un signal vidéo et un signa audio. La bande-annonce présente un certain nombre d'informations de programmation à destination de l'utilisateur. Les informations de programmation sont contenues dans le signal vidéo et dans le signal audio.

Parmi les informations de programmation possiblement contenues dans le signal vidéo et dans le signal audio, on trouve par exemple le titre du programme télédiffusé à venir, le canal de diffusion, l'heure de début du programme télédiffusé à venir, l'heure de fin du programme télédiffusé à venir, un acteur ou un présentateur qui participe au programme télédiffusé à venir, etc.

Parmi les informations de programmation possiblement contenues dans le signal audio, on trouve par exemple une mélodie et/ou un thème musical caractéristiques du programme télédiffusé à venir.

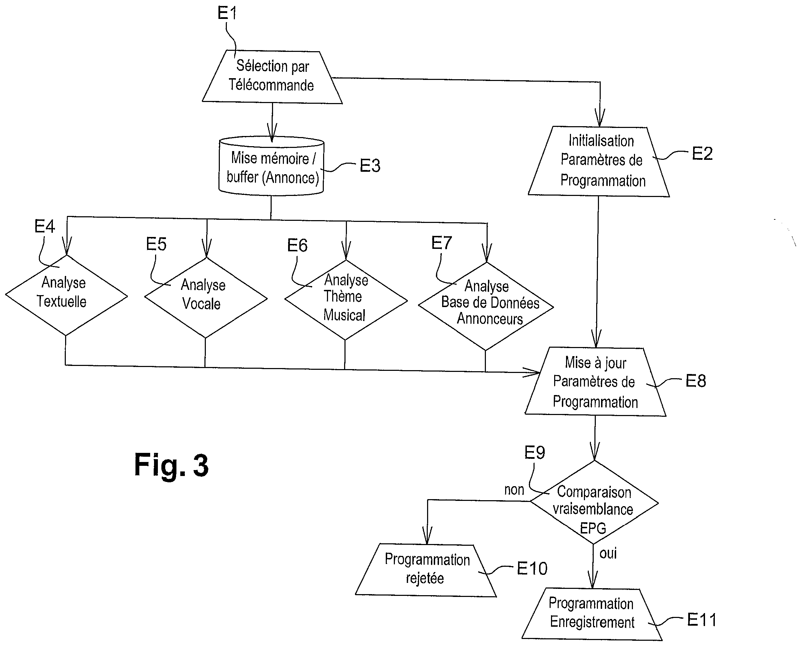

En référence à la figure 3, si l'utilisateur est intéressé par le programme télédiffusé à venir et souhaite l'enregistrer, il appuie sur une touche de la télécommande prévue à cet effet (étape E1). Le boîtier décodeur 1 reçoit alors un signal de demande d'enregistrement.

Le processeur 2 initialise des paramètres de programmation (étape E2). Les paramètres de programmation sont ici initialisés avec des valeurs initiales nulles. Les paramètres de programmation sont ici l'heure de début du programme télédiffusé à venir, l'heure de fin du programme télédiffusé à venir, le titre du programme télédiffusé à venir, et la répétitivité (chaque jour ou chaque semaine à la même heure, comme pour une série par exemple) du programme télédiffusé à venir.

Les paramètres de programmation diffèrent des informations de programmation en ce que les informations de programmation sont produites à destination de l'utilisateur, non seulement pour tenter de convaincre celui-ci de regarder le programme télédiffusé à venir, mais aussi pour lui indiquer à quel moment et sur quel canal de diffusion sera diffusé le programme télédiffusé à venir. Les paramètres de programmation, quant à eux, sont utilisés par le boîtier décodeur 1 pour programmer l'enregistrement du programme télédiffusé à venir. L'un des objectifs du procédé d'enregistrement selon l'invention est d'extraire les informations de programmation de la période d'enregistrement du programme télédiffusé en cours de visionnage précédant la réception du signal de demande d'enregistrement, pour en déduire les paramètres de programmation.

La période d'enregistrement du programme télédiffusé en cours de visionnage précédant la réception du signal de demande d'enregistrement est alors transférée dans une zone mémoire 3 (étape E3).

Le processeur 2 accède à la zone mémoire 3, et analyse alors l'enregistrement du programme télédiffusé en cours de visionnage sur la période d'enregistrement précédant la réception du signal de demande d'enregistrement.

L'analyse réalisée par le processeur 2 comporte ici quatre analyses réalisées simultanément. Les quatre analyses comprennent une première analyse (étape E4), une deuxième analyse (étape E5), une troisième analyse (étape E6) et une quatrième analyse (étape E7).

La première analyse comprend la mise en œuvre d'une reconnaissance optique de caractères. La reconnaissance optique de caractères est réalisée à partir d'images du signal vidéo de la bande-annonce. La reconnaissance optique de caractères consiste tout d'abord à tenter de reconnaître, dans chaque image, une zone textuelle. Lorsqu'une zone textuelle est reconnue, la zone textuelle est traduite en caractères textuels. Une analyse des caractères textuels permet de déterminer les informations de programmation contenues dans les caractères textuels.

La reconnaissance optique de caractères mise en œuvre dans la première analyse est semblable à la reconnaissance optique de caractères décrite dans le document « Video OCR: A Survey and Practitioner's Guide, Rainer Lienhart, Intel Corporation ; chapter 6 of Video Mining book, Editors: Azriel Rosenfeld, David Doermann, Daniel DeMenthon ISBN: 978-1-4419-5383-4 (Print) 978-1-4757-6928-9 (Online*) ».*

On note que la première analyse peut être effectuée sur des images comprises dans un intervalle réduit du signal vidéo, voire une seule image. On réduit ainsi les ressources du processeur 2 utilisées pour réaliser la première analyse. Ceci est rendu possible par le fait que, généralement, les caractères textuels demeurent affichés sur l'écran du téléviseur pendant une certaine durée qui permet à l'utilisateur d'avoir le temps de les lire.

La deuxième analyse comprend la mise en œuvre d'une reconnaissance vocale. La reconnaissance vocale est mise en œuvre sur le signal audio de la bande annonce. La deuxième analyse consiste à analyser la voix humaine présente dans le signal audio, et à la transcrire sous la forme d'un texte exploitable. Le texte exploitable permet de déterminer les informations de programmation contenues dans la partie vocale du signal audio.

Au cours de la deuxième analyse, les autres composantes sonores du signal audio sont supprimées (musique, effets sonores). Pour supprimer les autres composantes sonores, les fréquences qui n'appartiennent pas au spectre de la voix humaine sont assimilées à du bruit et sont supprimées par filtrage.

La deuxième analyse peut parfaitement se focaliser sur la reconnaissance d'informations de programmation nécessaires et utiles pour déterminer les paramètres de programmation. La reconnaissance vocale se focalise alors sur la reconnaissance de ces informations de programmation dans les phrases prononcées. Un procédé de comparaison avec des informations de programmation disponibles dans le guide électronique des programmes est mis en œuvre à cet effet.

La troisième analyse comporte la mise en œuvre d'une reconnaissance musicale, en l'occurrence d'une reconnaissance d'un thème musical ou d'une mélodie dans le signal audio de la bande-annonce. En effet, de nombreuses émissions et séries télévisuelles utilisent un thème musical ou une mélodie spécifique et reconnaissable, qui est aussi utilisé dans la bande-annonce. La reconnaissance du thème musical ou de la mélodie utilise le principe suivant. Après des traitements et filtrages adéquats, un échantillon du signal audio est comparé à une base de données centrale. En cas de correspondance, des informations, telles que le nom de l'artiste, le titre de la chanson et de l'album sont retournés à l'utilisateur. Le titre du programme télédiffusé à venir est obtenu à partir de ces informations concernant le thème musical ou la mélodie.

Enfin, la quatrième analyse consiste à comparer la bande-annonce avec une base de données prédéfinie, à identifier la bande-annonce et à acquérir des informations de programmation associées à la bande-annonce identifiée et stockées dans la base de données. La base de données prédéfinie comporte un grand nombre de bandes-annonces préalablement enregistrées, stockées et mise à disposition par des annonceurs ou des diffuseurs.

La reconnaissance directe de la bande-annonce consiste ici à extraire celle-ci de la période d'enregistrement, et à l'envoyer vers un serveur externe accessible par un réseau de type internet (*Cloud*)*,* via le port Ethernet. Le serveur externe effectue la comparaison avec les bandes-annonces de la base de données.

Suite à la première analyse, à la deuxième analyse, à la troisième analyse et à la quatrième analyse qui viennent d'être décrites, le processeur 2 du boîtier décodeur 1 utilise les informations de programmation pour mettre à jour les paramètres de programmation (étape E8).

Les paramètres de programmation sont alors comparés avec des paramètres prédéfinis fournis par le guide de programme électronique, pour vérifier la vraisemblance des paramètres de programmation (étape E9). Le but est notamment de vérifier que le programme télédiffusé à venir, dont le titre a été défini, sera bien diffusé à partir de l'heure de début déterminée sur le canal de diffusion déterminé. On élimine ainsi des erreurs potentielles d'enregistrement.

Dans le cas où des incohérences sont détectées, la demande d'enregistrement est rejetée (étape E10). Le boîtier décodeur 1 affiche alors sur l'écran du téléviseur le menu de programmation standard du boîtier décodeur 1.

Si la vraisemblance des paramètres de programmation est vérifiée, les paramètres de programmation sont mis en mémoire et remplacent les valeurs initiales.

Le boîtier décodeur 1 utilise donc les paramètres de programmation pour programmer automatiquement l'enregistrement du programme télédiffusé à venir dans le boîtier décodeur 1, sans autre intervention de l'utilisateur (Ell).

L'enregistrement du programme télédiffusé à venir est alors réalisé au moment de la diffusion du programme télédiffusé à venir.

On note ici que, si la première analyse, la deuxième analyse, la troisième analyse ou la quatrième analyse fournissent des informations de programmation résultant en des paramètres de programmation incohérents, les paramètres de programmation « valides », définis à l'étape E8, sont obtenus selon la règle de la majorité. Si aucune majorité ne se dégage, les paramètres de programmation issus de la quatrième analyse sont privilégiés.

Bien entendu, l'invention n'est pas limitée au mode de réalisation décrit mais englobe toute variante entrant dans le champ de l'invention telle que définie par les revendications.

On a évoqué ici un « programme télédiffusé » qui est diffusé par un téléviseur. Le programme télédiffusé peut parfaitement être diffusé par une source différente, et notamment par une source uniquement sonore, telle qu'une radio. La bande-annonce est alors seulement entendue, et non visionnée par l'utilisateur.

L'architecture du boîtier décodeur peut bien sûr être complètement différente. L'accès internet peut être réalisé non pas via un port Ethernet, mais via tout autre moyen, par exemple via des moyens de communication sans fil.

Le procédé d'enregistrement peut être mis en œuvre dans un équipement différent du boîtier décodeur, par exemple dans un module intégré dans un téléviseur.

Le procédé d'enregistrement décrit ici met en œuvre la première analyse, la deuxième analyse, la troisième analyse et la quatrième analyse. Il n'est cependant pas nécessaire de mettre en œuvre la totalité de ces analyses.

On a indiqué que la reconnaissance directe de la bande-annonce (au cours de la quatrième analyse) consiste notamment à extraire celle-ci de la période d'enregistrement et à l'envoyer vers un serveur externe. Il est bien sûr possible de mettre en œuvre une autre étape, entièrement ou partiellement, par un serveur externe accessible via un réseau de type internet (et notamment la première analyse, la deuxième analyse ou la troisième analyse).

## Revendications

1. Procédé d'enregistrement d'un programme télédiffusé à venir dont une diffusion est annoncée par une bande-annonce visionnée ou entendue par un utilisateur, le procédé d'enregistrement comportant les étapes :
- d'enregistrer en continu un programme télédiffusé en cours de visionnage par l'utilisateur en conservant l'enregistrement au moins sur une période d'enregistrement précédant un instant présent de visionnage ;
- lorsque la bande-annonce du programme télédiffusé à venir est diffusée, de recevoir un signal de demande d'enregistrement émis par l'utilisateur ;
- d'analyser l'enregistrement du programme télédiffusé en cours de visionnage sur la période d'enregistrement précédant la réception du signal de demande d'enregistrement pour obtenir des paramètres de programmation, l'analyse démarrant suite à la réception du signal de demande d'enregistrement ;
- d'enregistrer le programme télédiffusé à venir en utilisant les paramètres de programmation.

2. Procédé d'enregistrement selon la revendication 1, dans lequel l'analyse comporte la mise en œuvre d'une reconnaissance optique de caractères.

3. Procédé d'enregistrement selon la revendication 1, dans lequel l'analyse comporte la mise en œuvre d'une reconnaissance vocale.

4. Procédé d'enregistrement selon la revendication 1, dans lequel l'analyse comporte la mise en œuvre d'une reconnaissance musicale.

5. Procédé d'enregistrement selon la revendication 1, dans lequel l'enregistrement en continu est réalisé par l'intermédiaire d'un buffer circulaire (13).

6. Procédé d'enregistrement selon la revendication 1, le procédé d'enregistrement étant mis en œuvre par un boîtier décodeur (1) et le signal de demande d'enregistrement étant émis par une télécommande (10) du boîtier décodeur (1).

7. Procédé d'enregistrement selon la revendication 1, comprenant en outre l'étape de comparer les paramètres de programmation avec des paramètres prédéfinis contenus dans un guide de programme électronique pour vérifier la vraisemblance des paramètres de programmation obtenus.

8. Procédé d'enregistrement selon la revendication 1, comprenant au moins une étape mise en œuvre entièrement ou partiellement par un serveur externe accessible via un réseau de type internet.

9. Boîtier décodeur comportant des moyens de traitement agencés pour mettre en œuvre le procédé d'enregistrement selon l'une des revendications précédentes.

10. Programme d'ordinateur comprenant des instructions pour mettre en œuvre, par un équipement de type boîtier décodeur, le procédé d'enregistrement selon l'une des revendications 1 à 8.

11. Moyens de stockage, **caractérisés en ce qu'**ils stockent un programme d'ordinateur comprenant des instructions pour mettre en œuvre, par un équipement de type boîtier décodeur, le procédé d'enregistrement selon l'une des revendications 1 à 8.

## Patentansprüche

1. Aufzeichnungsverfahren zur Aufzeichnung eines bevorstehenden Fernsehprogramms, dessen Ausstrahlung durch einen Trailer angekündigt wird, der von einem Nutzer gesehen oder gehört wird, wobei das Aufzeichnungsverfahren die Schritte umfasst:
- kontinuierliches Aufzeichnen eines Fernsehprogramms während der Betrachtung durch den Nutzer, indem die Aufzeichnung zumindest über eine Aufzeichnungsperiode beibehalten wird, die einem derzeitigen Betrachtungszeitpunkt vorausgeht;
- wenn der Trailer des bevorstehenden Fernsehprogramms ausgestrahlt wird, Empfangen eines Aufzeichnungsanforderungssignals, das von dem Nutzer gesendet wird;
- Analysieren der Aufzeichnung des Fernsehprogramms während der Betrachtung über die Aufzeichnungsperiode, die dem Empfang des Aufzeichnungsanforderungssignals vorausgeht, um Programmierparameter zu erhalten, wobei die Analyse nach dem Empfang des Aufzeichnungsanforderungssignals beginnt;
- Aufzeichnen des bevorstehenden Fernsehprogramms unter Verwendung der Programmierparameter.

2. Aufzeichnungsverfahren nach Anspruch 1, bei dem die Analyse das Durchführen einer optischen Zeichenerkennung umfasst.

3. Aufzeichnungsverfahren nach Anspruch 1, bei dem die Analyse das Durchführen einer Stimmerkennung umfasst.

4. Aufzeichnungsverfahren nach Anspruch 1, bei dem die Analyse das Durchführen einer Musikerkennung umfasst.

5. Aufzeichnungsverfahren nach Anspruch 1, bei dem die kontinuierliche Aufzeichnung mittels eines Ringspeichers (13) erfolgt.

6. Aufzeichnungsverfahren nach Anspruch 1, wobei das Aufzeichnungsverfahren durch eine Set-Top-Box (1) durchgeführt wird und wobei das Aufzeichnungsanforderungssignal von einer Fernsteuerung (10) der Set-Top-Box (1) ausgesandt wird.

7. Aufzeichnungsverfahren nach Anspruch 1, ferner umfassend den Schritt des Vergleichens der Programmierparameter mit vordefinierten Parametern, die in einem elektronischen Programmführer enthalten sind, um die Wahrscheinlichkeit der erhaltenen Programmierparameter zu verifizieren.

8. Aufzeichnungsverfahren nach Anspruch 1, mindestens umfassend einen Schritt, der ganz oder teilweise von einem externen Server durchgeführt wird, der über ein Netzwerk vom Typ Internet zugänglich ist.

9. Set-Top-Box, umfassend Verarbeitungsmittel, die ausgebildet sind, um das Aufzeichnungsverfahren nach einem der vorhergehenden Ansprüche durchzuführen.

10. Computerprogramm, umfassend Anweisungen zum Durchführen des Aufzeichnungsverfahrens nach einem der Ansprüche 1 bis 8 mittels einer Ausrüstung vom Typ Set-Top-Box.

11. Speichermittel, **dadurch kennzeichnet, dass** sie ein Computerprogramm speichern, das Anweisungen zum Durchführen des Aufzeichnungsverfahrens nach einem der Ansprüche 1 bis 8 mittels einer Ausrüstung vom Typ Set-Top-Box umfasst.

## Claims

1. A recording method for recording a forthcoming broadcast program that is to be broadcast as announced by a trailer being viewed or heard by a user, the recording method comprising the steps of:
- continuously recording broadcasting that is being viewed by the user and conserving that recording at least over a recording period preceding the present viewing instant;
- while the trailer of the forthcoming broadcast program is playing, receiving a recording request signal issued by the user;
- analyzing the recording of the broadcasting that is being viewed over the recording period preceding reception of the recording request signal in order to obtain programming parameters, the analysis starting after reception of the recording request signal;
- recording the forthcoming broadcast program by using the programming parameters.

2. A recording method according to claim 1, wherein the analysis includes performing optical character recognition.

3. A recording method according to claim 1, wherein the analysis includes performing voice recognition.

4. A recording method according claim 1, wherein the analysis includes performing music recognition.

5. A recording method according to claim 1, wherein the continuous recording is performed by means of a circular buffer (13).

6. A recording method according claim 1, the recording method being performed by a decoder box (1) and the recording request signal being issued by a remote control (10) of the decoder box (1).

7. A recording method according claim 1, further comprising a step of comparing the programming parameters with predefined parameters contained in an electronic program guide in order to verify the plausibility of the resulting programming parameters.

8. A recording method according to claim 1, including at least one step that is performed in full or in part by an external server that is accessible via an Internet type network.

9. A decoder box including processor means arranged to perform the recording method according to any preceding claim.

10. A computer program including instructions enabling equipment of the decoder box type to perform the recording method according to any one of claims 1 to 8.

11. Storage means, **characterized in that** they store a computer program including instructions enabling equipment of the decoder box type to perform the recording method according to any one of claims 1 to 8.
